# EUROPEAN PATENT SPECIFICATION

(11) **EP 2 690 067 B1**
(45) Date of publication and mention of the grant of the patent: **20.03.2019**
(21) Application number: 13156060.9
(22) Date of filing: 21.02.2013
(51) Int. Cl.: C01B 33/44

(54) **Mechanochemical method for obtaining organoclays from smectites**
Mechanochemisches Verfahren zum Erhalten von Organotonen aus Smektitton
Procédé mécanochimique pour l'obtention d'organo-argiles à partir de smectites

(30) Priority: 27.07.2012 EP 12178295
(43) Date of publication of application: 29.01.2014
(73) Proprietor: Latvijas Universitate, 1586 Riga (LV)
(72) Inventor: Kostjukovs, Juris, 1003 Riga (LV); Actins, Andris, 2169 Salaspils (LV); Karasa, Julija, 3407 Liepaja (LV)
(74) Representative: Fortuna, Aleksandra

(56) References cited:
- GB-A- 2 158 053
- US-A- 4 105 578
- US-A- 4 474 706
- US-A- 5 028 351
- HRACHOVA J ET AL: "Influence of organic surfactants on structural stability of mechanochemically treated bentonite", JOURNAL OF THERMAL ANALYSIS AND CALORIMETRY JULY 2010 SPRINGER NETHERLANDS NLD, vol. 101, no. 1, July 2010 (2010-07), pages 161-168, XP002714864, DOI: 10.1007/S10973-009-0575-5
- MAKOTO OGAWA ET AL.: "Formation of Organoammonium-Montmorillonites by Solid-Solid Reactions", CHEMISTRY LETTERS (THE CHEMICAL SOCIETY OF JAPAN), 1990, pages 71-74, XP002714916,

## Description

### Technical Field

The invention relates to the field of obtaining organoclays, more particularly to manufacturing organocomplexes from smectites containing clay and onium organic derivatives by solid-state treatment.

### Background Art

Smectites are an important class of clay minerals because of their specific properties such as high cation-exchange capacity, adsorption, high surface area, and swelling behavior. The most common dioctahedral smectite is montmorillonite (also is called smectite), a 2:1 layer phyllosilicate constituted from an octahedral sheet located between two tetrahedral SiO₂ sheets.

Typically organoclays are obtained from smectite containing clays. Clay modification results that naturally occurring inorganic exchangeable cations in clay structure are replaced with a variety of organic cations or sorbates.

The intercalation of onium organic derivatives between the clay layers changes the surface properties from highly hydrophilic to increasingly hydrophobic. In addition, modification of the swelling clay for example with a cationic surfactant results in an increase in the basal spacing of the layer and exposure of new sorption sites of clays.

Natural clay's surface property modification is of importance for organoclays applications. The organoclays can be used in variety of environmental applications because of their unique sorption capabilities. In particular, the hydrophobic nature of the organoclay implies that the material can be used as a filter material for water purification. Nowadays there are many applications of organoclays used as sorbents in pollution prevention and environmental remediation such as the treatment of spills, wastewater and hazardous waste landfills.

Modified clay minerals, are used in a wide range of different practical applications, mainly as adsorbents for organic pollutants, but also as reinforcing fillers for plastics and electric materials and even catalysts. Organoclay based nanocomposites exhibit a remarkable improvement in properties when compared with untreated polymer or conventional micro- and macro-composites. The organic derivatives have found application also as rheological control agents in aqueous and nonaqueous dispersions, like lubricants, drilling fluids, greases, oils and paints. Moreover, the organoclays are applied to remove several water pollutants such as organic compounds, pesticides and herbicides, anionic contaminants, heavy metals, and pharmaceutical products in water.

There are known different ways to modify 2:1 clay minerals: adsorption, ion exchange with inorganic cations and cationic complexes, ion exchange with organic cations, binding of inorganic and organic anions, mainly at the edges, grafting of organic compounds, reaction with acids, pillaring by different types of poly (hydroxo) metal cations, interlamellar or intraparticle and interparticle polymerization, dehydroxylation and calcination, delamination and reaggregation of smectite clay minerals, and physical treatments such as lyophilisation, ultrasound, and even plasma (Bergava and Lagaly, Surface modification of clay minerals. Applied Clay 19 (2001), 1-3). The organoclays are generally prepared in solutions by cation exchange reaction or by solid- state reaction.

Cation exchange technique consists of interlayer cation exchange of the clay mineral by onium cations in aqueous solutions or in organic solvents. Such methods where organoclays are obtained by ion exchange in aqueous or organic solutions are not effective due to large solvent, energy and time consumption.

Organic molecules can be intercalated in dried clay minerals by solid-state reaction without or with the minimal use of solvents. The absence or minimalizing of solvents in the preparation process is environmentally good and makes the process more suitable for industrialization.

The advantages of the proposed method compared to the prior art solutions, where organoclays are produced mainly by ion exchange in various kinds of solutions is that obtaining clay organocomplexes mechanochemically using mills is faster (about 30 minutes). There is one more advantage in the proposed process: the reactants can be added in dry state so it is not necessary to operate with volumes of aqueous solutions as it is described in ion exchange methods, where bentonite is dispersed in an organic liquid (patent US 5,292,908). Compared to the methods where organoclays are obtained by solid-state reactions manually using mortar and pestle, the advantage of the proposed method is that proceeding is more effective and fully automatized. Also exists a process for preparing an organic smectite comprising stirring a smectite with an organic cation-supplying substance in a porcelain mortar with a stirring rod connected to a motor (Patent US 5028351).

The one more advantage of the proposed method compared to the prior art solution (patent US 4,474,706), where organoclays are produced mechanochemically by vigorous blending and mixing in the apparatus at increased temperatures (60°C), that synthesis proceeds at room temperature and normal pressure instead of proceeding with pressure 0<1 atm as described in patent RU 2176983.

### Disclosure of Invention

The aim of the invention is to provide an effective method for obtaining organoclays from smectites containing clay and onium organic compounds by solid-state (mechanochemical) treatment. It is known that critical factor in any chemical synthesis procedures is the use of organic solvents as these are often harmful and also expensive, so main advantage of such mechanochemical treatment is proceeding without usage of organic solvents. Moreover, mechanochemical process significantly minimizes time and energy consumption, providing high yields of synthesized organoclays at the same time.

The objective is achieved by the proposed method for obtaining organoclays from smectites containing clay with onium compound (sorbate) by solid-state mechanochemical treatment using planetary ball mill or mixer mill.

Sorbates for smectite modification used according to the present invention for obtaining organoclays are onium organic compounds (derivatives), which contain onium cation with monovalent substitutions. Such organic compounds can be: tertiary ammonium cations, R₃NH⁺ or protonated tertiary amines, e.g. triethanolammonium (C₂H₄OH)₃NH⁺ (protonated triethanolamine); quaternary ammonium cations, R₄N⁺ or NR⁺, e.g. octadecyltrimethylammonium C₁₈H₃₇(CH₃)₃N⁺ or hexadecyltrimethylammonium C₁₆H₃₃(CH₃)₃N⁺; quaternary phosphonium cations, R₄P⁺ or PR⁺, e.g. tetraphenylphosphonium, (C₆H₅)₄P⁺, and other onium organic compounds containing onium cation with monovalent substitutions. The sorbates can also be quaternary ammonium salts (or cationic surfactants) having one long carbon-chain molecule: octadecyltrimethylammonium chloride or ODTMA (C18) and hexadecyltrimethylammonium bromide or HDTMA (C16); salts of protonated triethanolamines, such as triethanolammonium acetate (TEAAc) and triethanolammonium formate (TEAF); and quaternary phosphonium salt, such as tetraphenylphosphonium bromide.

The manufacturing process includes the following steps: (i) mixing thermally treated or non-heated (without any thermal treatment) smectites containing clay with onium compound (sorbate), where optional thermal treating of smectites may be heating to 350° C for from 2 to 4 hours; (ii) adding from 15 to 25% water (m/m) as ion exchange medium, wherein the weight ratio of the smectites containing clay, onium compound and water is (from 6 to 4):(from 4 to 2):(from 3 to 1), (iii) processing the mixture obtained in planetary ball mill or mixer mill. Further the obtained gels like organoclays are dried and crushed into powder in e.g. agate mortar.

Smectites used in the manufacturing process are preferably concentrated from clay having low contents of smectites by process of coagulation (patent LV 14290). Further the obtained smectites are thermally treated by heating in muffle 300°C - 350°C for 2 - 4 hours. Heating at elevated temperatures allows to get rid of e.g. microorganisms and bacteria in clay. However non heated smectites can also be modified using this proposed mechanochemical method.

Quaternary ammonium salts (cationic surfactants) used according to one embodiment have antibacterial properties, so can be used to obtain potentially antiseptic on organoclays based materials.

The weight ratio of thermally treated smectite containing clay, said onium organic compounds (derivatives) and water is (6 to 4):(4 to 2):(3 to 1). The smectites modification process is typically carried out for from 10 to 30 minutes.

The proposed process allows modifying non-heated and thermally treated smectite containing clay by solid- state reaction due to using planetary ball mill or mixer mill. Both mills provide mechanochemical interaction that is used for manipulating the intercalation of organic compounds in clay mineral smectite. The high pressure and shear stress applied to clay particles and surfactant that are trapped between jar and balls stimulates the intercalation. For grinding clay and surfactant a jar filling should consist of about 1/3 sample and 1/3 ball charge. The remaining third is the free jar volume that is necessary for the free movement of the balls.

### Examples of Implementation of Invention

### Example 1

34.3 g octadecyltrimethylammonium chloride is added to 65.7 g thermally treated (350°C for 2 hours) smectite containing clay from Saltiski deposits in zirconium oxide grinding jar, mixed, added 25 mL of water. Grinding jar is fixed in the planetary ball mill Retsch PM-400 (speed of the jars - 300 rpm, stainless steel balls - 16 pcs. with diameter - 2 cm). Grinding process is carried out for 30 minutes. The product is dried at temperature of 80°C and then crushed into powder in agate mortar. Dry mass of the organoclay obtained-97.8g.

### Example 2

26.7 g hexadecyltrimethylammonium bromide is added to 73.3 g thermally treated (350°C for 4 hours) smectite containing clay from Saltiski deposits in zirconium oxide grinding jar, mixed, added 25 mL of water. Grinding jar is fixed in the planetary ball mill Retsch PM-400 (speed of the jars - 300 min⁻¹, stainless steel balls - 16 pcs. with diameter - 2 cm). Grinding process is carried out for 30 minutes. The product is dried at temperature of 80°C and then crushed into powder in agate mortar. Dry mass of the organoclay obtained-97.5g.

### Example 3

34.3 g octadecyltrimethylammonium chloride is added to 65.7 g thermally treated (300°C for 4 hours) smectite containing clay from Saltiski deposits in zirconium oxide grinding jar, mixed, added 25 mL of water. Grinding jar is fixed in the planetary ball mill Retsch PM-400 (speed of the jars - 300 rpm, stainless steel balls - 16 pcs. with diameter - 2 cm). Grinding process is carried out for 30 minutes. The product is dried at temperature of 80°C and then crushed into powder in agate mortar. Dry mass of the organoclay obtained-98.0g.

### Example 4

0.52 g octadecyltrimethylammonium chloride is added to 1 g thermally treated (300°C for 2 hours) smectite containing clay from Vadakste deposits in stainless steel grinding jar, mixed, added 0.2 mL of water. Grinding jar is fixed in the mixer mill Retsch MM-301 (frequency - 15 s⁻¹, stainless steel ball with diameter - 3 cm). Mixing process is carried out for 15 minutes. The product is dried at temperature of 80°C and then crushed into powder in agate mortar. Dry mass of the organoclay obtained - 1.4 g.

### Example 5

0.35 g hexadecyltrimethylammonium bromide is added to 1 g thermally treated (350°C for 2 hours) smectite containing clay from Vadakste deposits in stainless steel grinding jar, mixed, added 0.2 mL of water. Grinding jar is fixed in the mixer mill Retsch MM-301 (frequency - 15 s⁻¹, stainless steel ball with diameter - 3 cm). Mixing process is carried out for 15 minutes. The product is dried at temperature of 80°C and then crushed into powder in agate mortar. Dry mass of the organoclay obtained - 1.2 g.

### Example 6

0.52 g hexadecyltrimethylammonium bromide is added to 1 g thermally treated (300°C for 2 hours) smectite containing clay from Saltiski deposits in stainless steel grinding jar, mixed, added 0.2 mL of water. Grinding jar is fixed in the mixer mill Retsch MM-301 (frequency - 15 s⁻¹, stainless steel ball with diameter - 3 cm). Mixing process is carried out for 15 minutes. The product is dried at temperature of 80°C and then crushed into powder in agate mortar. Dry mass of the organoclay obtained - 1.4 g.

### Example 7

1.13 g triethanolammonium acetate is added to 3 g non-heated smectite containing clay from Vadakste deposits in stainless steel grinding jar, mixed, added 0.5 mL of water. Grinding jar is fixed in the mixer mill Retsch MM-301 (frequency - 15 s⁻¹, stainless steel ball with diameter - 3 cm). Mixing process is carried out for 10 minutes. The product is dried at temperature of 80°C and then crushed into powder in agate mortar. Dry mass of the organoclay obtained - 4.0 g.

### Example 8

1.05 g triethanolammonium formate is added to 3 g thermally treated (300°C for 2 hours) smectite containing clay from Vadakste deposits in stainless steel grinding jar, mixed, added 0.5 mL of water. Grinding jar is fixed in the mixer mill Retsch MM-301 (frequency - 15 s⁻¹, stainless steel ball with diameter - 3 cm). Mixing process is carried out for 10 minutes. The product is dried at temperature of 80°C and then crushed into powder in agate mortar. Dry mass of the organoclay obtained - 4.0 g.

### Example 9

0,35 g octadecyltrimethylammonium chloride is added to 1 g non-heated smectite containing clay from Saltiski deposits in stainless steel grinding jar, mixed, added 0.2 mL of water. Grinding jar is fixed in the mixer mill Retsch MM-301 (frequency - 15 s⁻¹, stainless steel ball with diameter - 3 cm). Mixing process is carried out for 15 minutes. The product is dried at temperature of 80°C and then crushed into powder in agate mortar. Dry mass of the organoclay obtained - 1.3 g.

### Example 10

1,20 g tetraphenylphosphonium bromide is added to 5 g non-heated smectite containing clay from Saltiski deposits in stainless steel grinding jar, mixed, added 2,5 mL of water. Grinding jar is fixed in the mixer mill Retsch MM-301 (frequency - 15 s⁻¹, stainless steel ball with diameter - 3 cm). Mixing process is carried out for 25 minutes. The product is dried at temperature of 80°C and then crushed into powder in agate mortar. Dry mass of the organoclay obtained - 6.1 g.

## Claims

1. A mechanochemical method for obtaining organoclays from smectites containing clay, comprising the following steps:
(i) mixing smectites containing clay with onium organic derivative,
(ii) adding from 15 to 25% water (m/m) to the mixture obtained at step (i), wherein the weight ratio of the smectites containing clay, onium organic derivative and water is (6 to 4):(4 to 2):(3 to 1),
(iii) processing the mixture in planetary ball mill or mixer mill,
(iv) drying the mixture and crushing into powder.

2. The method according to claim 1, wherein onium organic derivative is onium compound containing onium cation with monovalent substitutions.

3. The method according to claim 2, wherein the onium compound is selected from the group consisting of: tertiary ammonium cations, quaternary ammonium cations, quaternary phosphonium cations, quaternary ammonium salts, quaternary phosphonium salts.

4. The method according to claim 2 or 3, wherein the onium compound is selected from the group consisting of: triethanolammonium (protonated triethanolamine), octadecyltrimethylammonium, hexadecyltrimethylammonium, tetraphenylphosphonium, octadecyltrimethylammonium chloride, hexadecyltrimethylammonium bromide, triethanolammonium acetate, triethanolammonium formate, tetraphenylphosphonium bromide.

5. The method according to any of the preceding claims, wherein smectites used in step (i) are thermally treated by heating from 300° C to 350° C for from 2 to 4 hours.

## Patentansprüche

1. Mechanochemisches Verfahren zur Gewinnung von Organotonen aus tonhaltigen Smektiten, umfassend die folgenden Schritte:
(i) Mischen smektitehaltigen Tons mit organischem Oniumderivat,
(ii) Zugabe von 15 bis 25 % Wasser (m/m) zu der in Schritt (i) erhaltenen Mischung, wobei das Gewichtsverhältnis der Smektite, die Ton, organisches Oniumderivat und Wasser enthalten, (6 zu 4): (4 zu 2):(3 zu 1) beträgt,
(iii) Verarbeiten der Mischung in einer Planetenkugelmühle oder einer Mischmühle,
(iv) Trocknen der Mischung und Zerkleinern zu Pulver.

2. Verfahren nach Anspruch 1, wobei das organische Oniumderivat eineOniumverbindung ist,die ein Oniumkation mit einwertigen Substitutionen enthält..

3. Verfahren nach Anspruch 2, wobei die Oniumverbindung ausgewählt ist aus der Gruppe, bestehend aus: tertiären Ammoniumkationen, quaternären Ammoniumkationen, quaternären Phosphoniumkationen, quaternären Ammoniumsalzen, quaternären Phosphoniumsalzen.

4. Verfahren nach Anspruch 2 oder 3, wobei die Oniumverbindung ausgewählt ist aus der Gruppe bestehend aus: Triethanolammonium (protoniertes Triethanolamin), Octadecyltrimethylammonium, Hexadecyltrimethylammonium, Tetraphenylphosphonium, Octadecyltrimethylammoniumchlorid, Hexadecyltrimethylammoniumbromid, Triethanolammoniumacetat, Triethanolammoniumformat, Tetraphenylphosphorbromid.

5. Verfahren nach einem der vorhergehenden Ansprüche, wobei die in Schritt (i) verwendeten Smektite durch Erhitzen von 300 bis 350 °C für 2 bis 4 Stunden thermisch behandelt werden.

## Revendications

1. Procédé mécanochimique d'obtention d'organo-argiles à partir d'une argile contenant des smectites, comprenant les étapes suivantes :
(i) le mélange d'une argile contenant des smectites avec un dérivé organique onium,
(ii) l'ajout de 15 à 25 % d'eau (m/m) au mélange obtenu à l'étape (i), dans lequel le rapport pondéral de l'argile contenant des smectites, du dérivé organique onium et de l'eau est de (6 à 4):(4 à 2):(3 à 1),
(iii) le traitement du mélange dans un broyeur à boulets planétaire ou un broyeur-mélangeur,
(iv) le séchage du mélange et le concassage en une poudre.

2. Procédé selon la revendication 1, dans lequel le dérivé organique onium est un composé onium contenant un cation onium avec des substitutions monovalentes.

3. Procédé selon la revendication 2, dans lequel le composé onium est choisi dans le groupe constitué de : cations ammonium tertiaire, cations ammonium quaternaire, cations phosphonium quaternaire, sels d'ammonium quaternaire, sels de phosphonium quaternaire.

4. Procédé selon la revendication 2 ou 3, dans lequel le composé onium est choisi dans le groupe constitué de : triéthanolammonium (triéthanolamine protonée), octadécyltriméthylammonium, hexadécyltriméthylammonium, tétraphénylphosphonium, chlorure d'octadécyltriméthylammonium, bromure d'hexadécyltriméthylammonium, acétate de triéthanolammonium, formiate de triéthanolammonium, bromure de tétraphénylphosphonium .

5. Procédé selon l'une quelconque des revendications précédentes, dans lequel les smectites utilisées à l'étape (i) sont traitées thermiquement en chauffant de 300 °C à 350 °C pendant 2 à 4 heures.
